# EUROPEAN PATENT SPECIFICATION

(11) **EP 0 697 815 B1**
(45) Date of publication and mention of the grant of the patent: **17.09.1997**
(21) Application number: 94917660.6
(22) Date of filing: 20.05.1994
(51) Int. Cl.: A21D 8/02, A21D 13/00, A21D 8/04

(54) **METHOD FOR OBTAINING A PIZZA QUICKLY COOKED**
VERFAHREN ZUR GEWINNUNG EINER SCHNELLEN GEKOCHTEN PIZZA
PROCEDE DE PREPARATION D'UNE PIZZA A CUISSON RAPIDE

(30) Priority: 21.05.1993 IT MI931053
(43) Date of publication of application: 28.02.1996
(73) Proprietor: DIFFUSIONE MOROMARE IN FRANCHISING S.R.L., 16129 Genova (IT)
(72) Inventor: DI MARIA, Arnaldo, I-16129 Genova (IT)
(74) Representative: De Nova, Roberto
(86) International application number: EP9401644
(87) International publication number: WO9427446

(56) References cited:
- CH-A- 599 756
- DE-C- 4 016 944
- US-A- 3 975 552
- US-A- 4 645 673

## Description

Principally the present invention refers to a method for obtaining a pizza quickly cooked.

According to a further aspect of its, the present invention relates to a method for obtaining basis for pizza, for pizzas quickly cooked.

Actually, for the cooking of a pizza, are necessary about 5-6 minutes.

A requirement strongly felt into the sphere of pizza houses is to make pizzas which request shortened cooking times, thus reducing the wait times of the customers at tables, but maintaining unaltered the irremissible manual and craftsmanlike connotation which marks the italian pizza making.

It can not therefore be taken into consideration the solution which provides the techniques already known in catering, utilising precooked foods, or partially precooked foods, to be completely cooked only by reheating, by means of micro wave oven or the like, at the given moment.

Efforts of shortening the cooking times, increasing the oven temperature, have not given at the moment tangible results, because temperatures definitely high can not be realized. In fact, at high temperatures, the pizzas tend to burst, or to explode, and, at the end, burn at the surface, remaining uncooked at the interior.

It must be also said that, being also known the interconnections between the ingredient practice and the cooking times, many efforts have been made, along many years, to reduce the cooking times, testing kneading of different compositions, without moreover reaching appreciable results.

The problem which underlies the present invention is to think up a method for obtaining a pizza and of a respective kneading for pizza which satisfy the above mentioned requirement, overcoming the inconvenient cited referring to the prior art.

The solution idea which has taken to the invention is to reduce the humidity into the kneading, at the same time making a kneading compatible with such a reduced humidity.

This problem is solved by a method for obtaining a pizza quickly cooked, which comprises the phases of:
- arranging a mixture with soft wheat flour and hard wheat flour in the ratio of 60% and 40% respectively;
- obtaining with said mixture a kneading having an humidity not greater than 30% in weight;
- maintaining the kneading for 3-4 hours to realize a first leavening;
- breaking the kneading in loaves of predetermined size;
- maintaining the loaves for about 1-2 hours to realize a second leavening;
- forming from the loaves corresponding pizza basis having predetermined dimensions.

Further characteristics and the advantages of the method according to the present invention will be apparent from the following description of a preferred realizing example, given indicatively and not limitatively.

In the method for obtaining of a pizza according to the invention it is arranged, first of all, a mixture of wheat flour, comprising soft wheat flour, preferably but not necessarily a wheat flour of 00 kind, and hard wheat flour, in the ratio of 60% and 40% respectively.

With such a flour mixture, and likewise with water, oil, for example seed oil or maize oil, salt and leaven, is obtained a kneading, according to the example herewith indicated:

| | |
|---|---|
| - wheat flour mixture | kg 35 |
| - water | kg 15 |
| - oil | kg 0,650 |
| - salt | kg 0,650 |
| - leaven | kg 0,100 |

reaching a total weight of kg 51,400 of kneading having an humidity not greater than 30%.

The kneading is maintained, for a first leavening period, at a temperature of 24°C for about 3 hours and 30 minutes.

Successively said kneading is broken into loaves having sizes of about 110 g.

The loaves are maintained, for a second leavening period, at a temperature of 24°C for about 1 hour and 30 minutes.

Successively the single loaf is formed to obtain a pizza base having predetermined dimensions and precisely with a diameter of about 30-33 cm.

The pizza base, completed with the required garnishing, is introduced into an oven at a temperature comprised in a range between about 350°C and 400°C.

The oven cooking is prolonged for a time comprised between 60 s and 40 s, respectively for the above mentioned temperatures.

At the end of this time the pizza is cooked and is ready to be eaten.

The cooking is carried on without any inconvenience for the low humidity of the pizza base at the cooking phase. Such a low humidity is determined by the low content of water in the kneading and by the loss of humidity occurring during the two leavening periods.

A kneading for obtaining pizza basis, according to the invention, comprises the following ingredients:

| | |
|---|---|
| - wheat flour mixture | 65-70% |
| - water | 28-30% |
| - oil | 1,0-1,5% |
| - salt | 1,0-1,5% |
| - leaven | about 0,2% |

the wheat flour mixture comprising soft wheat flour, preferably but not necessarily of the 00 kind, and hard wheat flour, in the following ratio:

| | |
|---|---|
| - soft wheat flour | about 60% |
| - hard wheat flour | about 40% |

The main advantage of the invention lies in the fact of having realized an unexpected quickness in cooking of the italian pizza.

A further advantage lies in the fact that, from effected tasting, it is to be expected that the pizza according to the invention satisfy the taste of the most demanding customers and result also to be easily digestible.

## Claims

1. Method for obtaining a pizza quickly cooked, comprising the phases of:
- arranging a mixture with soft wheat flour and hard wheat flour in the ratio of 60% and 40% respectively;
- obtaining with said mixture a kneading having an humidity not greater than 30% in weight;
- maintaining the kneading for 3-4 hours to realize a first leavening;
- breaking the kneading in loaves of predetermined size;
- maintaining the loaves for about 1-2 hours to realize a second leavening;
- forming from the loaves corresponding pizza basis having predetermined dimensions.

2. Method according to the claim 1, characterized by the fact of comprising the phase of:
- cooking said pizza basis in oven at 350-400°C for 60-40 s.

3. Pizza base, for obtaining pizzas quickly cooked, characterized by the fact of being obtained by the method of claim 1.

## Patentansprüche

1. Verfahren zur Gewinnung einer schnell zubereiteten Pizza mit den Verfahrensschritten:
- Zubereiten einer Mischung aus Weichweizenmehl und Hartweizenmehl im Verhältnis von 60 : 40;
- Gewinnen einer Knetmasse mit einem Feuchtigkeitsgehalt von nicht mehr als 30 Gew.-% aus der Mischung;
- Stehenlassen der Knetmasse für 3 bis 4 Stunden, um ein erstes Aufgehen zu erreichen;
- Brechen der Knetmasse in Laibe von vorbestimmter Größe;
- Stehenlassen der Laibe für etwa 1 bis 2 Stunden, um ein zweites Aufgehen zu erzielen;
- Formen entsprechender Pizzaböden von vorbestimmter Größe aus den Laiben.

2. Verfahren nach Anspruch 1,
**gekennzeichnet durch**
den Verfahrensschritt:
- Zubereiten des Pizzabodens bei 350 - 400 °C für 40 - 60 Sekunden.

3. Pizzaboden zur Gewinnung von schnell zubereiteten Pizzas,
**dadurch gekennzeichnet,**
daß er durch das Verfahren von Anspruch 1 erhalten wird.

## Revendications

1. Procédé d'obtention d'une pizza à cuisson rapide, comprenant les étapes consistant :
- à préparer un mélange de farine de blé tendre et de farine de blé dur en des proportions respectives de 60 % à 40 % ;
- à obtenir au moyen dudit mélange une pâte à pétrir ayant une humidité non supérieure à 30 % en poids ;
- à maintenir la pâte à pétrir pendant 3 à 4 heures pour obtenir une première levée ;
- à diviser la pâte à pétrir en pains de volume prédéterminé ;
- à maintenir les pains pendant environ 1 à 2 heures pour réaliser une seconde levée ;
- à former à partir des pains des fonds de pizza correspondants ayant des dimensions prédéterminées.

2. Procédé suivant la revendication 1, caractérisé en ce qu'il comprend l'étape consistant :
- à cuire les fonds de pizza dans un four à une température de 350 à 400°C pendant un temps de 60 à 40 secondes.

3. Fond de pizza, destiné à l'obtention de pizzas à cuisson rapide, caractérisé en ce qu'il est obtenu par le procédé suivant la revendication 1.
